# EUROPEAN PATENT SPECIFICATION

(11) **EP 2 515 361 B1**
(45) Date of publication and mention of the grant of the patent: **06.07.2016**
(21) Application number: 12160206.4
(22) Date of filing: 19.03.2012
(51) Int. Cl.: H01M 2/02, H01M 2/10, H01M 10/6556, H01M 10/6557, H01M 10/6554, H01M 10/6555, H01M 10/656, H01M 10/613

(54) **Battery unit**
Batterieeinheit
Unité de batterie

(30) Priority: 20.04.2011 JP 2011093874
(43) Date of publication of application: 24.10.2012
(73) Proprietor: Mitsubishi Jidosha Kogyo Kabushiki Kaisha, Tokyo 108-8410 (JP); Lithium Energy Japan, Kyoto-shi, Kyoto (JP)
(72) Inventor: Horii, Naoyuki, Tokyo, 108-8410 (JP); Taneda, Ryoji, Tokyo, 108-8410 (JP); Nemoto, Seiji, Kyoto-shi (JP)
(74) Representative: Vossius & Partner Patentanwälte Rechtsanwälte mbB

(56) References cited:
- EP-A1- 2 015 322
- EP-A1- 2 413 421
- EP-A2- 1 484 774
- WO-A1-2012/088050
- WO-A2-2010/148224
- DE-A1-102006 025 535
- DE-A1-102007 050 518
- JP-A- 2010 192 207

## Description

The prevent invention is related to a vehicle battery unit including a cooling mechanism as described in claim 1.

A battery system made up of a secondary battery having a relatively large capacity is installed in an electric vehicle or a hybrid vehicle. Normally, a battery system includes several battery units each having a plurality of battery cells so as to facilitate the assembling work and handling thereof and to obtain a predetermined voltage.

The secondary battery generates heat through supplemental charge or discharged in the vehicle running, and the temperature thereof rises. In general, the battery performance of the secondary battery is improved when the temperature thereof rises, while when the temperature of the secondary battery surpasses a predetermined temperature, the efficiency thereof may be reduced or the deterioration of the battery may be occurred.

Conventionally, as a cooling method for cooling a secondary battery, there has been known an air cooling method in which an air passage is formed between battery units or battery cells so that outside air is introduced into the air passage to cool the battery units or the battery cells. In addition, a water cooling method has also been known in which batteries are brought into contact with a cooling device through which a coolant flows so as to cool the batteries. Additionally, JP-A-2010-192207 discloses cooling batteries in which batteries are brought into contact with a cooling device which employs Peltier elements so as to cool the batteries.

However, in a battery system employing the air cooling method, the air passage is formed between the batteries, and a blower unit is incorporated in the battery system. Therefore, the battery system may be large in size. Additionally, the batteries are fixed in place with the space defined therebetween. Thus the number of parts is increased, and production cost is increased.

In the invention described in JP-A-2010-192207, the number of batteries is limited which can be rested on an upper surface of the cooling device. Additionally, in order to cool a number of batteries, many cooling devices are required, leading to a problem that the provision of such many cooling devices eventually increases the production cost.

The problem above can be solved by the features specified in the claims.

EP1484774 describes a battery unit, comprising a plurality of capacitors; a cooling substrate, an opposite-to-terminal face of the capacitor being attached to the cooling substrate, a holding member provided between the cooling substrate and the capacitor and the holding member is formed with an opening portion at a position corresponding to the capacitor, and includes a holding piece, a deformable heat transfer member is accommodated in the opening portion.

DE102007050518 describes a battery unit with cells cells which are disposed on both sides of the cooling substrate.

It is therefore one advantageous aspect of the present invention to provide a battery unit which is small in size, which can reduce the number of parts involved and which costs less.

According to one advantage of the invention, there is provided a battery unit, comprising:
a plurality of battery cells; and
a cooling substrate, wherein
the battery cells are disposed so as to hold the cooling substrate therebetween, and
a face of the battery cell other than a terminal face thereof where terminals are provided is attached to a cooling surface of the cooling substrate so as to transfer heat between the cooling surface and the face attached thereto.

At least a pair of battery cells which are disposed on both sides of the cooling substrate so as to hold the cooling substrate therebetween may be assembled to the cooling substrate so that the terminal face faces outwards of the battery unit and an opposite-to-terminal face which is opposite to the terminal face is attached to the cooling surface of the cooling substrate so as to transfer heat therebetween.

The battery unit may be configured such that: the cooling substrate has a flat panel shape and includes a connecting pipe, and a passage which is connected to the connecting pipe and through which coolant flows is provided in the cooling substrate.

The battery unit is configured such that: a holding member which includes an assembling portion assembled to an end portion of a side of opposite-to-terminal face of the battery cell is provided between the cooling substrate and the battery cell, and a heat transfer member is interposed between the opposite-to-terminal face and the cooling substrate.

The battery unit configured such that: the holding member includes a holding piece, and the holding piece is formed with a sloping portion which contacts a lateral face of the battery cell which is connected with the opposite-to-terminal face so as to hold the end portion of the side of the opposite-to-terminal face of the battery cell.

According to the invention, there is provided a battery unit, comprising:
at least a pair of battery cells, each of which having a terminal face providing positive and negative terminals and an opposite-to-terminal face opposite to the terminal face;
a cooling substrate including cooling surfaces which are provided on both opposite sides thereof;
holding members, each of which holding an end portion of a side of the opposite-to-terminal face of each of the battery cells; and
an outer frame member surrounding an outer periphery of the battery unit, wherein
the holding members are disposed on the cooling surfaces of both opposite sides of the cooling substrate so as to hold the cooling substrate therebetween, and
the terminal face of each of the battery cells faces outwards of the battery unit,
a deformable heat transfer member is interposed between the opposite-to-terminal face and the cooling surface of the cooling substrate in each of the holding members so as to transfer heat between the opposite-to-terminal face and the cooling surface of the cooling substrate, and so as to position the battery cells in an arbitrary position in the corresponding holding members to position the terminal faces thereof on a same plane.

The battery cell may a secondary battery which stores electric power for driving a motor vehicle.

The invention is described in detail in conjunction with the drawings, in which:
Fig. 1 is a partially cut away perspective view showing a battery unit according to an embodiment of the invention,
Fig. 2 is an exploded perspective view of the battery unit of the embodiment,
Fig. 3 is a partial sectional view of the battery unit, and
Fig. 4 is a partial sectional view of the battery unit.

A battery unit 10 according to an embodiment of the invention will be described.

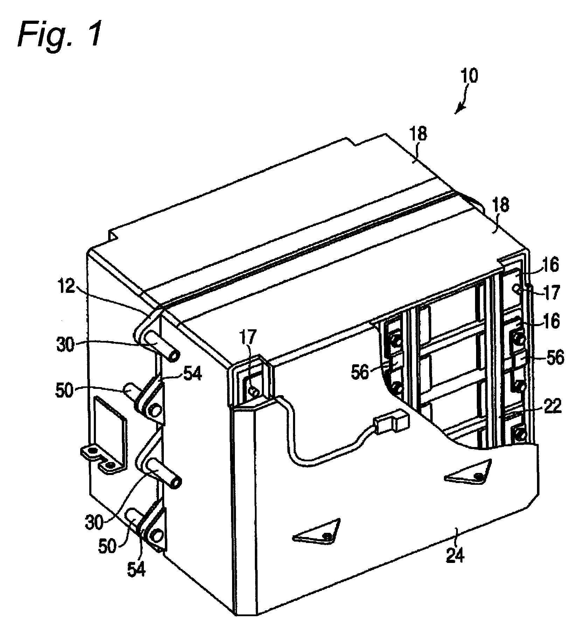

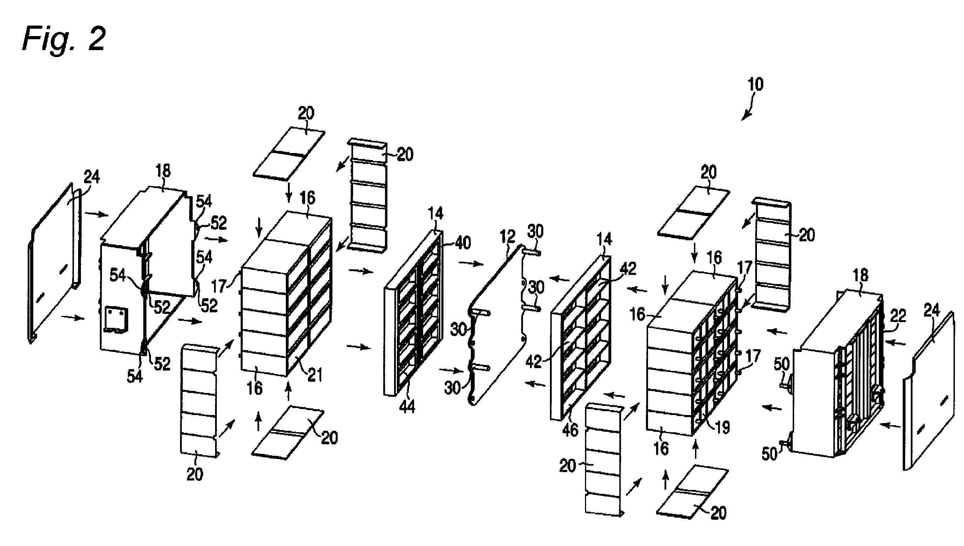

As shown in Fig. 1, a battery unit 10 has a rectangular parallelepiped shape and houses in an interior thereof a cooling substrate 12, holding members 14, battery cells 16 (refer to Fig. 2) and the like. Outer frame members 18 and lid members 24 are provided on external faces of the battery unit 10 so as to form an outer shell of the battery unit 10. Cutouts are provided in top left- and right-hand side corners of each of the lid members 24, so that terminals 17 are exposed through the cutouts. The terminals 17 are output terminals. The terminals 17 are connected to input terminals of a vehicle or another battery unit 10. Thus, the battery unit 10 constitutes a vehicle battery system singly or in combination with other battery units 10.

As shown in Fig. 2, the battery unit 10 includes the cooling substrate 12 in the center and has substantially symmetrical configurations on both sides of the cooling substrate 12 which are arranged so as to hold the cooling substrate 12 therebetween. The holding members 14, the battery cells 16, the outer frame members 18, insulation panels 20, fixing members 22 and the lid members 24 which are provided on both the sides of the cooling substrate 12 so as to hold it therebetween are members which are formed identical or symmetrical in configuration. Therefore, in the following description, one of the identical or symmetrical configurations of the battery unit 10 which are arranged on both the sides of the cooling substrate 12 so as to hold it therebetween will be described, and the detailed description of the other configuration will be omitted.

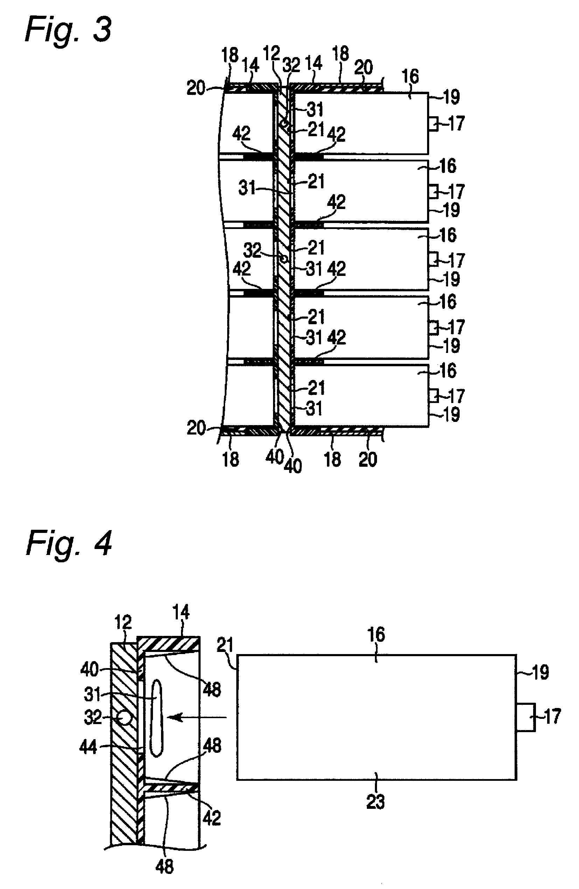

The cooling substrate 12, which has a flat panel-like shape, has connecting pipes 30 where a coolant enters or exits. Passages 32 are provided in an interior of the cooling substrate 12, and these passages 32 (refer to Fig. 3) are connected to the connecting pipes 30 for passage of the coolant. A cooling mechanism is connected to the connecting pipes 30 of the cooling substrate 12. The cooling mechanism includes a heat exchanger and cools the coolant. The cooled coolant is then caused to flow into interiors of the passages 32 from the connecting pipes 30 to cool the cooling substrate 12 while flowing through the interiors of the passages 32. The cooling mechanism is not limited thereto.

The battery cell 16 has a substantially rectangular parallelepiped shape, and both positive and negative terminals 17 are provided on one of longitudinal end faces of the battery cell 16. Hereinafter, the end face where the terminals 17 are provided is referred to as a terminal face 19, and the other end face of the battery cell 16 which lies opposite to the terminal face 19 is referred to as an opposite-to-terminal face 21. The opposite-to-terminal face 21 is made up of a metallic surface which is exposed and is formed as a heat transfer surface where heat in the interior of the battery cell 16 is transferred to the outside thereof from the opposite-to-terminal face 21.

The holding member 14 is formed of a resin and includes a base panel 40 and support materials 42 (holding pieces), as shown in Figs. 3, 4. Opening portions 44 are formed in the base panel 40 in positions which correspond individually to the battery cells 16 which are assembled into the battery unit 10. The opening portion 44 has a shape which is substantially equal to the opposite-to-terminal face 21 of the battery cell 16.

The support materials 42 are raised substantially perpendicularly from the base panel 40 so as to surround the opening portions 44. Thus, the plurality of support materials 42 form a frame 46 which houses the opposite-to-terminal face 21 and at least a part of lateral faces 23 of the battery cell 16 which are continuously connected with the opposite-to-terminal face 21.

Further, sloping surfaces 48 are formed on the support material 42 as shown in Fig. 4 so as to be brought into abutment with the lateral faces 23 of the battery cell 16 when the battery cell 16 is housed within the fame. The sloping surface 48 is formed so as to be deformed by the lateral faces 23 of the battery cell 16 when the battery cell 16 is housed within the frame 46 to thereby hold the battery cell 16 in an appropriate position within the frame 46. Members having any other form than the sloping surface 48 may be provided on the support material 42, provided that the members can hold the battery cell 16 in a predetermined position within the frame 46.

A heat transfer member 31 is provided between the cooling substrate 12 and the battery cell 16. The heat transfer member 31 has a high heat transfer coefficient and appropriate elasticity. The heat transfer member 31 is formed of a gel-like substance. However, there is imposed no limitation on the material of the heat transfer member 31. When the battery cell 16 is assembled into the holding member 14, the heat transfer member 31 is filled between the cooling substrate 12 and the opposite-to-terminal face 21 without any space left therebetween irrespective of the fixing position of the battery cell 16 so that heat is transferred efficiently between the cooling substrate 12 and the opposite-to-terminal face 21.

The outer frame member 18 is a member having a square section and is formed of sheet metal. Bolts 50 are provided at four locations along a circumferential edge of one of end faces of the outer frame member 18. Additionally, lugs 54 each having a bolt hole 52 are provided at four locations along a circumferential edge of a mating end face of the other outer frame member 18 which faces the outer frame member 18 having the bolts 50 provided thereon. The bolt holes 52 correspond to the bolts 50, and the bolts 50 pass through the corresponding bolt holes 52 when the pair of outer frame members 18 are assembled together.

The insulation panel 20 is formed of a resin. Four, that is, top, bottom, left and right insulation panels are provided. When the insulation panels 20 are attached to an outer circumferential surface of an assembly of battery cells 16, an outer circumferential shape defined by the insulation panels 20 so attached substantially equals an inner circumferential shape of the outer frame member 18. Additionally, protruding or rising portions which protrude inwards are provided on each of the insulation panels 20. When the insulation panels 20 are attached to the assembly of battery cells 16, the rising portions enter spaces defined between the battery cells 16 to hold the spaces.

The fixing member 22 is fixed to an outer end face of the outer frame member 18 with screws. The fixing member 22 has a lattice-like shape. When attached to the outer frame 18, the fixing member 22 allows the terminals 17 of the battery cells 16 to be exposed therefrom and fastens the terminal faces 19.

Busbars 56 are mounted on the terminals 17 exposed from the fixing member 22 so as to connect the battery cells 16 in series or in parallel according to a predetermined order. The lid member 24 is attached to an external side of the fixing member 22 so as to cover the terminals 17 and the like.

As has been described above, the holding members 14, the battery cells 16, the outer frame members 18, the insulation panels 20, the fixing members 22 and the lid members 24 are provided in the substantially symmetrical fashion across the cooling substrate 12. These members are fixed altogether by screwing the bolts 50 on one of the outer frame members 18 through the corresponding bolt holes 52 in the other outer frame member 18.

Next, the function of the battery unit 10 will be described.

The holding members 14 are disposed on both the sides of the cooling substrate 12. The end portions of the battery cells 16 where the opposite-to-terminal faces 21 are provided are assembled into the frames 46 in the holding members 14. In the holding members, the sloping surfaces 48 are plastically deformed when the battery cells 16 are assembled thereinto, whereby the battery cells 16 are held in the positions where they are forced into the frames 46 by the sloping surfaces 48. By holding the battery cells 16 in this way, the terminal faces 19 of the battery cells 16 are aligned on the same plane. Additionally, the heat transfer members 31 which are provided between the holding members 14 and the cooling substrate 12 are deformed as required according to the positions where the battery cells 16 are forced in, whereby the cooling substrate 12 and the opposite-to-terminal faces 21 of the battery cells 16 are closely attached to each other for connection with a high heat transfer coefficient defined therebetween.

The outer frame members 18 are fitted on the outer circumferences of the assemblies of battery cells 16, and the pair of outer frame members 18 are bolted together. The fixing members 22 fasten the battery cells 16. Additionally, the busbars 56 are mounted on the terminals 17 which are exposed from spaces defined in the lattice-shaped fixing members 22 so that the terminals 17 are electrically connected together. External wires are connected to the terminals 17 which are the output terminals.

A coolant is sent to the cooling substrate 12 so as to cool the cooling surfaces. Heat generated in the battery cells 16 is transferred from the opposite-to-terminal faces 21 to the cooling surfaces via the heat transfer members 31, whereby the battery cells 16 are cooled. The battery cells 16 are cooled on both the sides of the cooling substrate 12, and therefore, all the battery cells 16 assembled into the battery unit 10 are cooled by the cooling substrate 12.

In the battery unit 10, the terminals 17 are oriented to the outside of the battery unit 10, and moreover, the terminal faces 19 are aligned on the same plane. Therefore, the mounting work of the busbars 56 on the terminals 17 can be performed easily and accurately. The cooling substrate 12 is provided at the central portion of the battery unit 10. Therefore, the central portion of the battery unit 10 can be cooled where heat tends to be accumulated easily when the battery cells 16 are assembled to face each other, thereby making it possible to prevent the rising of temperature of the battery unit 10 effectively.

The connecting pipes 30 which are connected to the cooling substrate 12 are laid out so as to extend along lateral sides of the battery unit 10, whereby a required space can be reduced, and the battery unit 10 can be installed in a small space. Additionally, the cooling substrate 12 is disposed in the center of the battery unit 10, and therefore, distal ends of the connecting pipes 30 are prevented from protruding outwardly of the battery unit 10, thereby making it possible to make small the space where to install the battery unit 10 including the connecting pipes 30.

The battery cells 16 are stacked with the terminal faces 19 oriented outwardly of the battery unit 10. Therefore, a height dimension of the battery unit 10 can be adjusted according to the number of battery cells 16 to be stacked. This can provide, for example, a battery unit having a cooling function which can be installed in a place where the height dimension is limited. In addition, in this embodiment, the battery cells are arranged in two vertical rows which lie adjacent in a horizontal direction. However, the invention is not limited to this configuration.

A lateral face 23 of the battery cell 16 which connects the terminal face 19 and the opposite-to-terminal face 21 may be formed as a heat transfer surface, and the battery cell 16 may be disposed so that the lateral face 23 lies close to the cooling substrate 12.

The cooling substrate 12 may not employ the coolant but may employ other cooling methods based other cooling devices. The battery unit 10 may be installed singly to make up a vehicle battery system. Alternatively, a plurality of battery units 10 like the battery unit 10 may be connected together to make up a vehicle battery system. Further, the battery unit 10 may be applied not only to vehicles but also to other applications. In addition, the battery cell 16 may be applied to a secondary battery or storage system for an electric vehicle, that is, a so-called EV which can run on electric power or a hybrid vehicle.

According to the present invention, cooling surfaces of the cooling substrate can be used effectively since the battery cells are provided on both the sides of the cooling substrate, and hence, the battery unit can be made small in construction and the number of parts can be reduced. In addition, since the terminals of the battery cells can be aligned to face the outside of the battery unit, not only can the battery unit be handled easily, but also the connecting work can be facilitated.

## Claims

1. A battery unit (10), comprising:
a plurality of battery cells (16);
a cooling substrate (12) including cooling surfaces which are provided on both opposite sides thereof,
the battery cells (16) being disposed so as to hold the cooling substrate (12) on the both sides of the cooling substrate (12),
an opposite-to-terminal face (21) of the battery cell (16) opposite to a terminal face (19) thereof where negative and positive terminals (17) are provided being attached to the cooling surface of the cooling substrate (12) so as to transfer heat between the cooling surface and the opposite-to-terminal face attached thereto,
a holding member (14) which includes an assembling portion assembled to an end portion of a side of the opposite-to-terminal face (21) of the battery cell (16), the holding member (14) being provided between the cooling substrate (12) and the battery cell (16),
the holding member (14) is formed with an opening portion (44) at a position corresponding to the battery cell (16), and includes a holding piece (42) which is raised substantially perpendicularly from the cooling substrate (12) so as to surround the opening portion(44),
**characterized in that** a deformable heat transfer member (31) is accommodated in the opening portion (44) so as to be interposed between the opposite-to-terminal face (21) and the cooling substrate (21),
the holding piece (42) is formed with a sloping portion (48) which contacts a lateral face of the battery cell (16) which is connected with the opposite-to-terminal face (21) so as to hold the end portion of the side of the opposite-to-terminal face (21) of the battery cell, and
the sloping portion (48) is plastically deformed so that the battery cell (16) is held in a position where the battery cell (16) is forced into the assembling portion.

2. The battery unit (10) as set forth in Claim 1, wherein
at least a pair of battery cells (16) which are disposed on both sides of the cooling substrate (12) so as to hold the cooling substrate therebetween are assembled to the cooling substrate so that the terminal face (19) faces outwards of the battery unit.

3. The battery unit as set forth in Claim 1, wherein
the cooling substrate (12) has a flat panel shape and includes a connecting pipe (30), and
a passage (32) which is connected to the connecting pipe and through which coolant flows is provided in the cooling substrate (12).

4. A battery unit according to claim 2, further comprising:
an outer frame member (18) surrounding an outer periphery of the battery unit, wherein
the holding members (14) are disposed on the cooling surfaces of both opposite sides of the cooling substrate (12) so as to hold the cooling substrate therebetween, and
the deformable heat transfer member (31) transfers heat between the opposite-to-terminal face (21) and the cooling surface of the cooling substrate, and so as to position the battery cells in an arbitrary position in the corresponding holding members to position the terminal faces thereof on a same plane.

5. The battery unit as set forth in Claim 1 or 4, wherein
the battery cell (10) is a secondary battery which stores electric power for driving a motor vehicle.

6. The battery unit as set forth in Claim 1 or 5, wherein the heat transfer member is
formed of a gel-like substance.

7. The battery unit as set forth in Claim 1 or 6, wherein the cooling substrate includes
connecting pipes extending along lateral sides of the battery unit.

## Patentansprüche

1. Batterieeinheit (10), die aufweist:
mehrere Batteriezellen (16);
ein Kühlsubstrat (12) mit Kühlflächen, die auf beiden Gegenseiten davon vorgesehen sind,
wobei die Batteriezellen (16) so angeordnet sind, dass sie das Kühlsubstrat (12) auf den beiden Seiten des Kühlsubstrats (12) halten,
wobei eine Klemmengegenfläche (21) der Batteriezelle (16) entgegengesetzt zu einer Klemmenfläche (19) davon, an der eine Minus- und eine Plusklemme (17) vorgesehen sind, an der Kühlfläche des Kühlsubstrats (12) befestigt ist, um Wärme zwischen der Kühlfläche und der daran befestigten Klemmengegenfläche zu übertragen,
ein Halteteil (14), das einen Anbauabschnitt aufweist, der an einem Endabschnitt einer Seite der Klemmengegenfläche (21) der Batteriezelle (16) angebaut ist, wobei das Halteteil (14) zwischen dem Kühlsubstrat (12) und der Batteriezelle (16) vorgesehen ist,
das Halteteil (14) mit einem Öffnungsabschnitt (44) an einer Position in Entsprechung zur Batteriezelle (16) ausgebildet ist und ein Haltestück (42) aufweist, das vom Kühlsubstrat (12) im Wesentlichen senkrecht so vorsteht, dass es den Öffnungsabschnitt (44) umgibt,
**dadurch gekennzeichnet, dass**
ein verformbares Wärmeübertragungsteil (31) im Öffnungsabschnitt (44) so untergebracht ist, dass es zwischen der Klemmengegenfläche (21) und dem Kühlsubstrat (12) eingefügt ist,
das Haltestück (42) mit einem Neigungsabschnitt (48) ausgebildet ist, der eine Seitenfläche der Batteriezelle (16) kontaktiert, die mit der Klemmengegenfläche (21) verbunden ist, um den Endabschnitt der Seite der Klemmengegenfläche (21) der Batteriezelle zu halten, und
der Neigungsabschnitt (48) so plastisch verformt ist, dass die Batteriezelle (16) in einer Position gehalten wird, in der die Batteriezelle (16) in den Anbauabschnitt gedrückt ist.

2. Batterieeinheit (10) nach Anspruch 1, wobei
mindestens ein Paar Batteriezellen (16), die auf beiden Seiten des Kühlsubstrats (12) angeordnet sind, um das Kühlsubstrat dazwischen zu halten, am Kühlsubstrat so angebaut ist, dass die Klemmenfläche (19) von der Batterieeinheit nach außen weist.

3. Batterieeinheit nach Anspruch 1, wobei
das Kühlsubstrat (12) eine Flachplattenform hat und ein Verbindungsrohr (30) sowie
einen Durchgang (32) aufweist, der mit dem Verbindungsrohr verbunden und über den für Kühlmitteldurchfluss im Kühlsubstrat (12) gesorgt ist.

4. Batterieeinheit nach Anspruch 2, die ferner aufweist:
ein Außenrahmenteil (18), das einen Außenumfang der Batterieeinheit umgibt, wobei
die Halteteile (14) auf den Kühlflächen auf beiden Gegenseiten des Kühlsubstrats (12) angeordnet sind, um das Kühlsubstrat dazwischen zu halten, und
das verformbare Wärmeübertragungsteil (31) Wärme zwischen der Klemmengegenfläche (21) und der Kühlfläche des Kühlsubstrats überträgt und um die Batteriezellen in einer beliebigen Position in den entsprechenden Halteteilen so zu positionieren, dass die Klemmenflächen davon auf einer gleichen Ebene positioniert sind.

5. Batterieeinheit nach Anspruch 1 oder 4, wobei
die Batteriezelle (10) eine Sekundärbatterie ist, die elektrischen Strom zum Antreiben eines Kraftfahrzeugs speichert.

6. Batterieeinheit nach Anspruch 1 oder 5, wobei das Wärmeübertragungsteil aus einem gelartigen Stoff gebildet ist.

7. Batterieeinheit nach Anspruch 1 oder 6, wobei das Kühlsubstrat Verbindungsrohre aufweist, die sich entlang von Seitenflächen der Batterieeinheit erstrecken.

## Revendications

1. Unité de batterie (10) comprenant :
une pluralité d'éléments de batterie (16) ;
un substrat de refroidissement (12) comprenant des surfaces de refroidissement qui sont prévues sur ses deux côtés opposés,
les éléments de batterie (16) étant disposés afin de maintenir le substrat de refroidissement (12) sur les deux côtés du substrat de refroidissement (12),
une face opposée à la borne (21) de l'élément de batterie (16) opposée à sa face de borne (19) où sont prévues les bornes négative et positive (17), étant fixée à la surface de refroidissement du substrat de refroidissement (12) afin de transférer la chaleur entre la surface de refroidissement et la face opposée à la borne fixée à cette dernière,
un élément de support (14) qui comprend une partie d'assemblage assemblée à une partie d'extrémité d'un côté de la face opposée à la borne (21) de l'élément de batterie (16), l'élément de support (14) étant disposé entre le substrat de refroidissement (12) et l'élément de batterie (16),
l'élément de support (14) est formé avec une partie d'ouverture (44) dans une position correspondant à l'élément de batterie (16) et comprend une pièce de support (42) qui est levée sensiblement perpendiculairement à partir du substrat de refroidissement (12) afin d'entourer la partie d'ouverture (44),
**caractérisée en ce que** :
un élément de transfert de chaleur déformable (31) est logé dans la partie d'ouverture (44) afin d'être intercalé entre la face opposée à la borne (21) et le substrat de refroidissement (12),
la pièce de support (42) est formée avec une partie d'inclinaison (48) qui est en contact avec une face latérale de l'élément de batterie (16) qui est raccordée à la face opposée à la borne (21) afin de maintenir la partie d'extrémité du côté de la face opposée à la borne (21) de l'élément de batterie, et
la partie d'inclinaison (48) est plastiquement déformée de sorte que l'élément de batterie (16) est maintenu dans une position dans laquelle l'élément de batterie (16) est forcé dans la partie d'assemblage.

2. Unité de batterie (10) selon la revendication 1, dans laquelle :
au moins une paire d'éléments de batterie (16) qui sont disposés des deux côtés du substrat de refroidissement (12) afin de maintenir le substrat de refroidissement entre eux, sont assemblés au substrat de refroidissement de sorte que la face de borne (19) est orientée vers l'extérieur de l'unité de batterie.

3. Unité de-batterie selon la revendication 1, dans laquelle :
le substrat de refroidissement (12) a une forme de panneau plate et comprend un tuyau de raccordement (30), et
un passage (32) qui est raccordé au tuyau de raccordement et à travers lequel le réfrigérant s'écoule, est prévu dans le substrat de refroidissement (12).

4. Unité de batterie selon la revendication 2, comprenant en outre :
un élément de bâti externe (18) entourant une périphérie externe de l'unité de batterie, dans laquelle :
les éléments de support (14) sont disposés sur les faces de refroidissement des deux côtés opposés du substrat de refroidissement (12) afin de maintenir le substrat de refroidissement entre eux, et
l'élément de transfert de chaleur déformable (31) transfère la chaleur entre la face opposée à la borne (21) et la surface de refroidissement du substrat de refroidissement, et afin de positionner les éléments de batterie dans une position arbitraire dans les éléments de support correspondants pour positionner ses faces de bornes sur un même plan.

5. Unité de batterie selon la revendication 1 ou 4, dans laquelle :
l'élément de batterie (10) est une batterie secondaire qui stocke l'énergie électrique pour entraîner un véhicule à moteur.

6. Unité de batterie selon la revendication 1 ou 5, dans laquelle l'élément de transfert de chaleur est formé avec une substance de type gel.

7. Unité de batterie selon la revendication 1 ou 6, dans laquelle le substrat de refroidissement comprend des tuyaux de raccordement s'étendant le long des côtés latéraux de l'unité de batterie.
